# EUROPEAN PATENT SPECIFICATION

(11) **EP 0 212 441 B1**
(45) Date of publication and mention of the grant of the patent: **18.11.1993**
(21) Application number: 86110849.6
(22) Date of filing: 06.08.1986
(51) Int. Cl.: G05B 19/04

(54) **Programmable sequence controller**
Programmierbare Folgesteuerung
Commande séquentielle programmable

(30) Priority: 30.08.1985 JP 189501/85
(43) Date of publication of application: 04.03.1987
(73) Proprietor: HITACHI, LTD., Chiyoda-ku, Tokyo 100 (JP)
(72) Inventor: Takayuki, Oshiga, Narashino-shi, Chiba-ken (JP); Katsuhiro, Fujiwara, Funabashi-shi, Chiba-ken (JP); Toshiro, Narashino-shi, Chiba-ken (JP); Hiromi, Ishida, Chiba-shi, Chiba-ken (JP)
(74) Representative: Beetz & Partner Patentanwälte

(56) References cited:
- WO-A-84/04977
- US-A- 4 162 536
- US-A- 4 413 319
- US-A- 4 488 258

## Description

### BACKGROUND OF THE INVENTION:

The present invention relates particularly to a programmable sequence controller (hereinbelow, simply termed 'PSC') in accordance with the precharacterizing part of claim 1. Such a PSC is known from JP-A-58-132809. In general PSCs are furnished with the display function of displaying the input/output statuses of signals in order to check up on any error of a user program or to inquire into the cause of a malfunction. Further known PSCs are described in JP-A No. 58-94011 and No. 58-78207.

Many of the hitherto-proposed PSCs with the display function have indicator lamps unitarily mounted on the cases of the so-called input/output modules having signal input terminals and signal output terminals. It is therefore impossible to comply with a request for fulfilling the display function at a position remote from the input/output modules.

The number of indicator lamps to be prepared is equal to the number of signal input and output nodes on many occasions. In general, the number of the input/output nodes of a single input/output module is 8 x n (n being a positive integer), and hence, the number of the indicator lamps becomes considerably large.

As the number of the input/output nodes of one input/output module is considerably large, the number of leads becomes considerably large, when the logic processor and the indicator lamps are connected through parallel transmission lines. Especially when the input/output module and the transmission lines are connected by use of connectors, the dimensions of the connectors must be made smaller to the utmost.

It is dangerous for men to come into contact with input/output terminals. Therefore, insulating covers for concealing the terminals are required.

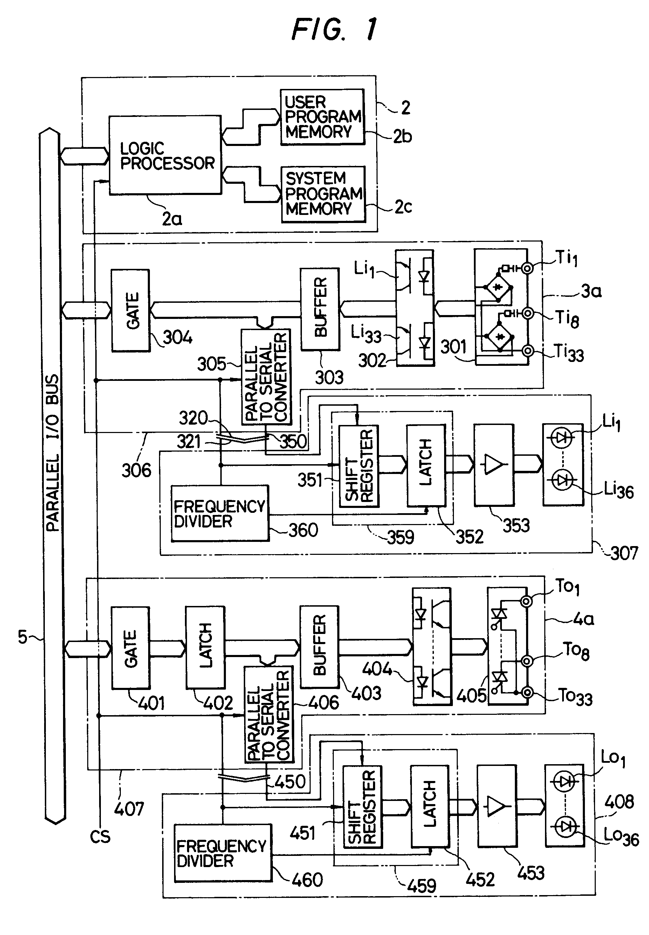

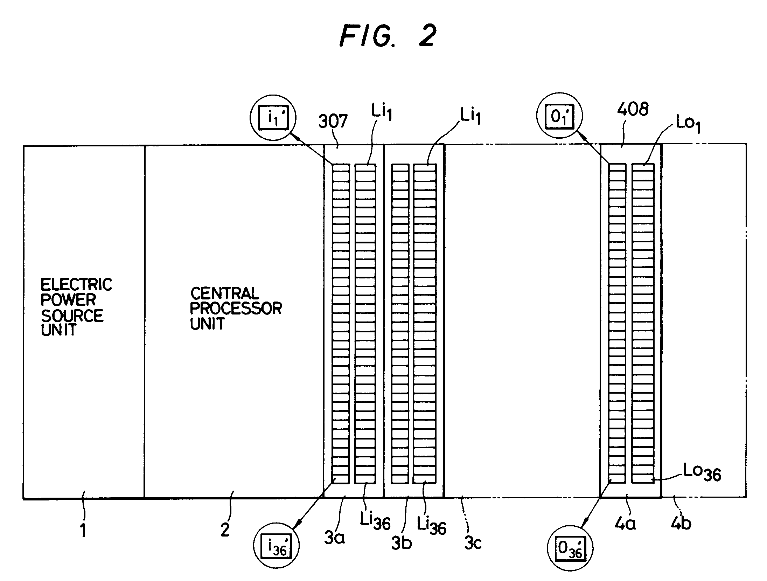

The WO 84/04977 describes as device for a protection and monitoring of information transmission between the central unit of a programmable computer and the sensors and/or actuators of the controlled process. A monitoring and displaying module is detachably connected with connectors of an input/output card having a plurality of electronic circuits which form the logic interfaces between a connection bus with the central unit on one hand and the sensors or actuators connected to each track on the other hand. As it is depicted in the Figs. 1 and 3 to 5, the input/output card includes indicator LEDs indicating the presence of the supply voltage. As it can be seen from Fig.2 of this document, the indicator LEDs are disposed at a position on the input/output card near its connector pins, so that the emitted light can be guided to the front panel of the monitoring module.The indicator lamps and the input/output terminals are arranged in a plane crossing at a right angle with their mounting direction so as to be adjacent to each other, so that an area S of a connecting surface between the lamp units (5) and the casing (6) becomes a sum of an area S1 for the input/output terminals and an area S2 for the indicator lamps, resulting in that the sum S of area S1 and area S2 becomes large and WO 84/04977 shows the problem that the issue of the present invention can not be resolved.

### SUMMARY OF THE INVENTION

The present invention has for its object to provide a PSC which can fulfil the display function at a position remote from input/output modules.

This object is solved in accordance with the invention by the features of claim 1.

The dependent claims characterize advantageous developments thereof.

By means of the proposed construction the front dimensions of a portion where the terminals of the input/output module are arrayed can be made smaller than in the prior art

Moreover, since the front surface of the signal input/output terminals is covered with the unit, conveniently the contact of men with the signal input/output terminals is not feared even when an insulating cover is not disposed separately.

By the use of the serial transmission line the dimensions of the connector can be reduced.

### BRIEF DESCRIPTION OF THE DRAWINGS:

The drawings illustrate embodiments of a programmable sequence controller according to the present invention, in which:
Fig. 1 is a block diagram of the PSC;
Fig. 2 is a front view thereof;
Fig. 3 is a front view showing an input module from which a panel bearing indicator lamps has been disjoined;
Fig. 4 is a perspective view showing an attaching configuration for a case and the panel;
Fig. 5 is a perspective view showing another attaching configuration for the case and the panel; and
Fig. 6 is a front view showing an output module from which a panel bearing indicator lamps has been disjoined; Fig. 7 and 8 are more detailed circuits of the block 301 and 405 respectively shown in Fig. 1.

### DESCRIPTION OF THE PREFERRED EMBODIMENTS:

Now, embodiments of the present invention illustrated in the drawings will be described.

Fig. 2 is a general view showing one aspect of a module type PSC. This controller is constructed of an electric power source unit 1, a central processor unit 2, input modules 3a, 3b ...., and output modules 4a, 4b.... . The electric power source unit 1 receives commercial electric power, and rectifies it or converts it into voltage levels required by the central processor unit 2 and the input/output modules 3a, 3b.../ 4a, 4b... . Also, during the service interruption of a commercial electric power source, it supplies backup electric power for holdign a user program written in a RAM 2b for storing this user program. The central processor unit 2 and the input/output modules 3a, 3b .../ 4a, 4b ... are connected to parallel I/O bus 5 and in parallel. Fig. 1 shows the state in which only one input module and one output module, namely, the modules 3a and 4a are connected to the parallel I/O bus 5, and the other modules 3b, 3c ..... and 4b, 4c ..... are omitted from illustration.

The central processor unit 2 has a logic processor 2a, the user program storing RAM 2b, and a ROM 2c for storing a system program.

The sequence program written by a user is written in the user program storing RAM 2b, while the system program necessary for operating the controller in accordance with the sequence program is written in the system program storing ROM 2c.

On the basis of the user program, the logic processor 2a executes a logical operation using as variables the inputs of signal input terminals Ti₁, Ti₂, ..... Ti₃₂ or the outputs of signal output terminals To₁, To₂ ..... To₃₂ on some occasions and delivers signals conforming to the operated result, to the predetermined signal output terminals To₁, To₂, ..... To₃₂.

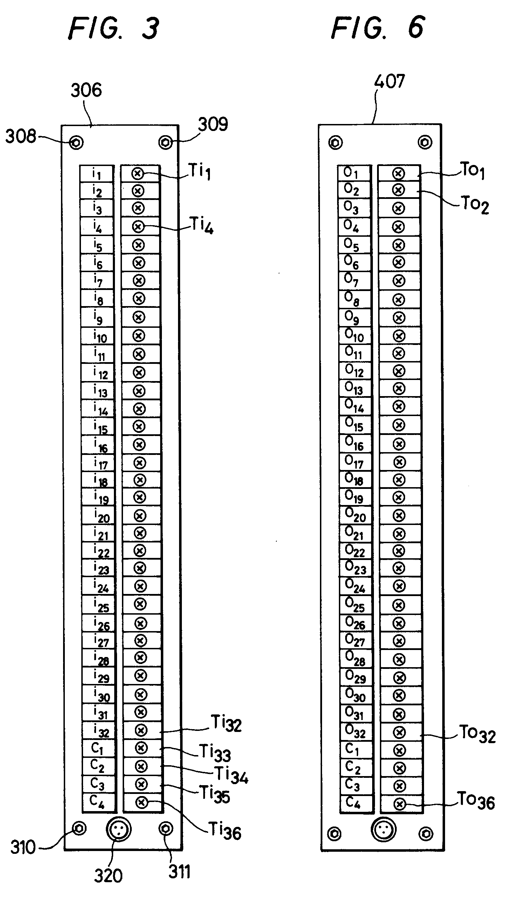

Fig. 3 is an exterior view of one of the input modules 3a, 3b ....._{.} Each input module has terminals Ti₁ - Ti₃₆ numbering thirty-six in total, to which terminal symbosl i₁, i₂, ..... i₃₂ and c₁ - c₄ are respectively affixed aside. Among them, the terminal Ti₃₃ functions as the common terminal of the input terminals Ti₁ - Ti₈. Likewise, the terminal Ti₃₄ functions as the common terminal of the input terminals Ti₉ - Ti₁₆, the terminal Ti₃₅ as the common terminal of the input terminals Ti₁₇ - Ti₂₄, and the terminal Ti₃₆ as the common terminal of the input terminals Ti₂₅ - Ti₃₂.

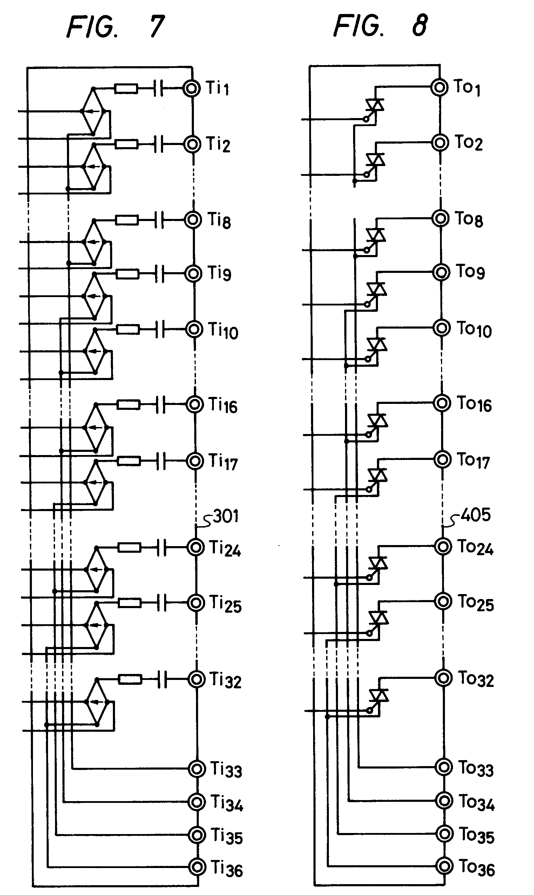

As only parts are illustrated in Fig.1 and more details are shown in Fig.7, rectifier circuits are connected between the respective terminals Ti₁ - Ti₃₂ and the common terminals Ti₃₃ - Ti₃₆ as shown in a block 301, and photo-isolators Li₁, Li₃₃ are connected on the output sides of the rectifier circuits as shown in a block 302. The photo-isolators serve to electrically isolate the input terminals i₁ - i₃₂ and common terminals i₃₃ - i₃₆ from the parallel I/O bus 5 and to transmit signals.

The outputs of the respective photo-isolators are converted by a buffer circuit 303 into TTL signals, which are input to the logic processor 2a through a gate 304 as well as the parallel I/O bus 5.

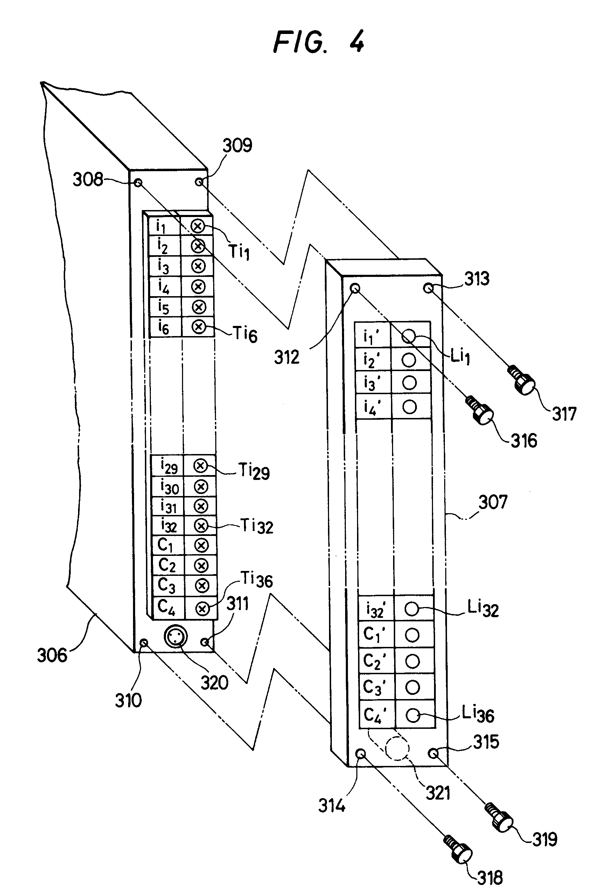

As shown in Fig. 4, each of the input modules 3a, 3b ..... has indicator lamps Li₁ - Li₃₆ which are equal in number to the input terminals Ti₁ - Ti₃₂ and common terminals Ti₃₃ - Ti₃₆. Although the indicator lamps Li₃₃ - Li₃₆ corresponding to the common terminals Ti₃₃ - Ti₃₆ can be omitted, they are sometimes convenient because the statuses of signals entering the common terminals can be observed. As shown in Fig.4, terminal symbols i₁' - i₃₂' and c₁' - c₄' are similarly indicated beside the indicator lamps. In each of the input modules 3a, 3b..., a panel 307 on which the indicator lamps Li₁ - Li₃₆ are mounted is constructed as a unit separate from a case 306 in which the rectifier circuit block 301, the block 302 served to transmit signals by the photo isolator as mentioned before, the buffer circuit 303, the gate 304, and a shift register as a parallel-to-serial converter 305 are assembled. The panel 307 is attached by detachable fixation means so as to cover the front surface of the input terminals Ti₁ - Ti₃₆.

Fig. 4 shows one aspect of the fixation means. In the embodiment illustrated here, the fixation means is constructed of threaded holes 308 - 311 which are provided in the four corners of the face of the case 306, through holes 312 - 315 which are provided in the panel 307 so as to oppose to the threaded holes, and screws 316 - 319 which are threadably inserted into the threaded holes 308 - 311 through the through holes 312 - 315.

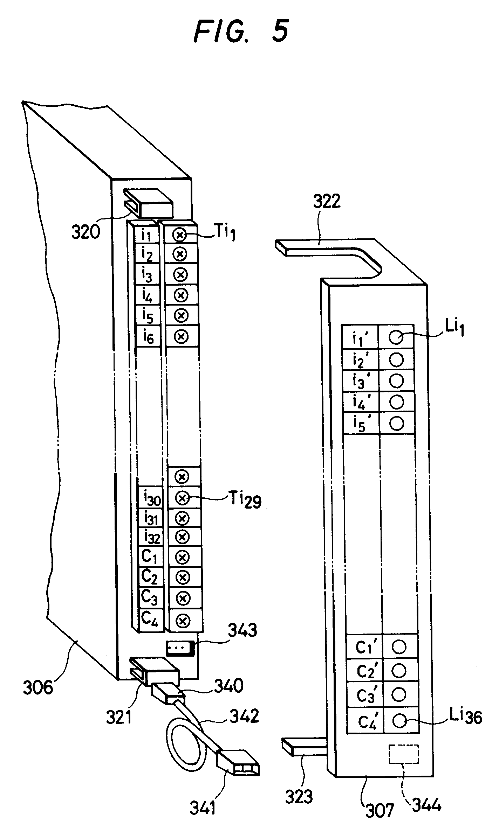

Fig. 5 shows another example of the fixation means. In this example, channels 320 and 321 extending horizontally are fastened on the upper and lower parts of the face of the case 306. Each of the channels 320 and 321 is disposed in such a manner that both sides of its open parts are fixed to the face of the case 306.

On the other hand, the panel 307 is provided with tongues 322 and 323 which are inserted into the respective channels 320 and 321 sidewards.

Fig. 6 is an exterior view of one of the output modules 4a, 4b ..... with a panel disjoined therefrom. Likewise to the input module, each output module has terminals To₁ - To₃₆ numbering thirty-six in total, to which terminal symbols o₁ - o₃₂ and co₁ - co₄ are respectively affixed aside. Among them, the terminal To₃₃ functions as the common terminal of the output terminals To₁ - To_{g}. Likewise, the terminal To₃₄ functions as the common terminal of the output terminals To₉ - To₁₆, the terminal To₃₅ as the common terminal of the output terminals To₁₇ - To₂₄, and the terminal To₃₆ as the common terminal of the output terminals To₂₅ - To₃₂. As only parts are illustrated in Fig. 1 and more details are shown in Fig. 8, signals are delivered from the logic processor 2a to the respective output terminals To₁ - To₃₂ and common terminals To₃₃ - To₃₆ through the parallel I/O bus 5, a gate 401, a latch a gate 401, a latch circuit 402, a buffer circuit 403, circuit 402, a buffer circuit 403, an isolation circuit 404 and an output circuit 405. Thirty-two photo-isolators are disposed in the isolation circuit 404, and their outputs are used to control the gates of corresponding Triace is the output block 405, whereby the signals are delivered to the output terminals To₁ - To₃₆.

As shown in Fig. 2, also each of the output modules 4a, 4b ..... has indicator lamps Lo₁ - Lo₃₆ which are equal in number to the output terminals To₁ - To₃₂ and common terminals To₃₃ - To₃₆. Although the indicator lamps Lo₃₃ - Lo₃₆ corresponding to the common terminals To₃₃ - To₃₆ can be omitted, they are sometimes convenient because the statuses of the signals of the common terminals can be observed.

In each of the output modules 4a, 4b ....., the panel 408 on which the indicator lamps Lo₁ - Lo₃₆ are mounted is constructed as a unit separate from a case 407 in which the gate 401, the latch circuit 402, the buffer circuit 403, the isolation circuit 404, the output circuit 405, and a shift register as a parallel-to-serial converter 406 are assembled. The panel 408 is attached by detachable fixation means so as to cover the front surface of the output terminals Lo₁ - Lo₃₆.

Since the fixation means may have the same construction as described in relation to the input modules 3a, 3b ....., if shall not be repeatedly explained.

As understood from the embodiment, the number of input nodes of each of the input modules 3a, 3b ..... or the number of output nodes of each of the output modules 4a, 4b ..... is as large as thirty-two. In recent years, this number of nodes tends to increase more.

In a desirable embodiment of the present invention, therefore, the case 306 and the panel 307 and also the case 407 and the panel 408 are respectively connected through serial transmission lines 350 and 450. As a result, the outputs of the buffer circuit 303 which are parallel signals are converted into serial signals by the parallel-to-serial converter 305, the serial signals received by the panel 307 are converted into parallel signals by a serial-to-parallel converter 359 which is disposed on the panel 307 and which is constructed of a shifter register 351 and a latch circuit 352, and these parallel signals are applied to the indicator lamps Li₁ - Li₃₆ through a buffer circuit 353.

In addition, the outputs of the latch circuit 402 which are parallel signals are converted into serial signals by the parallel-to-serial converter 406, the serial signals received by the panel 408 are converted into parallel signals by a serial-to-parallel converter 459 which is disposed on the panel 408 and which is constructed of a shift register 451 and a latch circuit 452, and these parallel signals are applied to the indicator lamps Lo₁ - Lo₃₆ through a buffer circuit 453.

The logic processor 2a, the shift registers 351, 451 and the parallel-to-serial converters 305, 406 are synchronously operated by receiving a common clock signal Cs. The latch circuits 352 and 452 are respectively controlled by the outputs of frequency dividers 360 and 460 disposed on the panels 307 and 408. The frequency dividers 360 and 460 produce the output signals synchronized with the clock signal Cs.

Owing to the above arrangement, the case 306 and the panel 307 and also the case 407 and the panel 408 can be connected by the serial transmission lines 350, 450 and a small number of signal lines for transmitting the clock signal Cs. Moreover, the same number of signal lines suffice for transmitting signals even when the numbers of input/output nodes of the input/output modules increase.

With the embodiment shown in Figs. 3 and 4, the jack 320 of a connector is disposed on the front surface of the case 306, while the plug 321 of the connector is disposed on the rear surface of the panel 307. When the screws 316 - 319 are tightened, the jack 320 and the plug 321 are connected, and the outputs of the parallel to serial converter 305 and the clock signal Cs are transmitted from the case 306 to the panel 307. In the state in which the panel 307 is attached by the fixation means, the front surface of the input/output terminals is covered with this panel 307. Besides, the indicator lamps for displaying the input/output statuses of the respective input/output terminals lie in front of the corresponding input/output terminals.

Further, with the embodiment shown in Fig. 5, a flexible cable 342 having a plug 340 at one end and a jack 341 at the other end is comprised. The plug 340 is inserted into a jack 343 disposed on the front surface of the case, and the jack 341 is fitted on a plug 344 disposed on the rear surface of the panel 307, whereby the outputs of the parallel-to-serial converter 305 are transmitted to the shift register 351, and the clock signal Cs is transmitted to the frequency divider 360 and the shift register 351.

According to such an embodiment, therefore, the indicator lamps can be readily disposed in a control board or on a console which is installed at a position distant from the case 306 (or 407).

## Claims

1. A programmable sequence controller comprising:
input/output modules (3a,3b,3c...; 4a,4b,4c,...), each provided with a casing (306; 407) and a panel (307; 408);
a central processing unit (2), including a logic processor (2a), a user program memory (2b) and a system program memory (2c);
input/output buses (5) for connecting said input/output modules and said central processing unit;
characterized in that
said casing (306;407) has:
a plurality of input/output terminals (Tiₙ;Toₙ), input/output circuits (301-304; 401-405) connected to said input/output terminals, and
means for connecting said input/output terminals to said input/output buses;
said panel (307;408) has a plurality of indicator lamps (Liₙ;Loₙ) for indicating states of signals supplied to said input/output terminals, said panel being removably fixed to said casing, whereby, when said panel is fixed to said casing (306;407), said panel (307;408) is so positioned as to cover the front surface of said input/output terminals;
said panel (307;408) has a spacing for storing said terminals at a side facing said input/output terminals;
said indicator lamps are arranged in a way to display states of signals supplied to the input/output terminals by giving an indication on a plane of the panel opposite to said input/output terminals; and
said input/output terminals and said indicator lamps are connected by connectors (320,321; 340-344).

2. A programmable sequence controller according to claim 1, characterized in that
said casing (306; 407) has at its one end a connection means for said input/output buses (5) and at the other end a plurality of input/output terminals (Tiₙ; Toₙ), respectively.

3. A programmable sequence controller according to claim 2, characterized in that the order of said indicator lamps is arranged to coincide with that of input/output terminals when the unit is fixed to said casing (306;407).

4. A programmable sequence controller according to claim 1, characterized in that there are provided serial transmission lines (350; 450) connecting said indicator lamps (Liₙ; Loₙ) to said input/output terminals (Tiₙ; Toₙ), parallel-to serial conversion means (305; 406) arranged between said input/output terminals and said transmission lines and serial-to-parallel conversion means (359; 459) arranged between said transmission lines and said indicator lamps so as to serial transmit the signals from said casing (306; 407) to said panel (307; 408).

5. A programmable sequence controller according to claim 4, characterized in that said serial-to-parallel conversion means is mounted on said panel (307; 408) and connected to said indicator lamps.

## Patentansprüche

1. Programmierbare Folgesteuerungsanlage umfassend:
Eingabe-/Ausgabe-Module (3a, 3b, 3c ...; 4a, 4b, 4c, ...), von denen jedes ein Gehäuse (306; 407) und ein Bedienungspult (307; 408) hat;
einen Zentralprozessor (2) mit einer Logikeinheit (2a), einem Nutzerprogramm-Speicher (2b) und einem Systemprogramm-Speicher (2c);
Eingabe-/Ausgabe-Bus (5), der die besagten Eingabe-/Ausgabe-Module und den besagten Prozessor miteinander verbindet,
dadurch gekennzeichnet, daß
das besagte Gehäuse (306; 407) umfaßt:
eine Mehrzahl von Eingabe-/Ausgabe-Anschlüssen (Tiₙ; Toₙ),
Eingabe-/Ausgabe-Schaltungen (301 - 304; 401 - 405), die mit den besagten Eingabe-/Ausgabe-Anschlüssen verbunden sind, und
Einrichtung, die besagte Eingabe-/Ausgabe-Anschlüsse und besagten Eingabe-/Ausgabe-Bus miteinander verbindet;
besagte Bedienungseinheit (307; 408) eine Mehrzahl von Anzeigelampen (Liₙ; Loₙ) für die Anzeige der an den Eingabe-/Ausgabe-Anschlüssen anliegenden Signale hat, wobei die besagte Bedienungseinheit abnehmbar an dem besagten Gehäuse angebracht ist, und zwar so, daß bei Fixierung der besagten Bedienungseinheit an dem Gehäuse (306; 407) die besagte Bedienungseinheit (307; 408) die Vorderseite der besagten Eingabe-/Ausgabe-Anschlüsse abdeckt;
die besagte Bedienungseinheit (307; 408) eine Beabstandung für die Unterbringung der besagten Anschlüsse auf der Seite hat, die dem besagten Eingabe-/Ausgabe-Anschlüssen gegenüberliegt;
die besagten Anzeigelampen so angeordnet sind, daß sie die Signale an den Eingabe-/Ausgabe-Anschlüssen durch Anzeige auf einer Fläche der Bedienungseinheit anzeigt, die den besagten Eingabe-/Ausgabe-Anschlüssen gegenüberliegt, und
die besagten Eingabe-/Ausgabe-Anschlüsse und die besagten Anzeigelampen durch Stecker (320, 321; 340 - 344) miteinander verbunden sind.

2. Programmierbare Folgesteuerungsanlage nach Anspruch 1, dadurch gekennzeichnet, daß
das besagte Gehäuse (306; 407) an seiner einen Seite eine Verbindungseinrichtung für den besagten Eingabe-/Ausgabe-Bus (5) bzw. an der anderen Seite eine Mehrzahl von Eingabe-/Ausgabe-Anschlüssen (Tiₙ; Toₙ) hat.

3. Programmierbare Folgesteuerungsanlage nach Anspruch 2, dadurch gekennzeichnet, daß die Anzeigelampen so angeordnet sind, daß sie mit den Eingabe-/Ausgabe-Anschlüssen übereinstimmen, wenn die Einheit an dem besagten Gehäuse (306; 407) befestigt wird.

4. Programmierbare Folgesteuerungsanlage nach Anspruch 1, dadurch gekennzeichnet, daß serielle Übertragungsleitungen (350; 450) die besagten Anzeigelampen (Liₙ; Loₙ) mit den besagten Eingabe-/Ausgabe-Anschlüssen (Tiₙ; Toₙ) verbinden, Parallel-Seriell-Konverter (305; 406) zwischen den besagten Eingabe-/Ausgabe-Anschlüssen und den besagten Übertragungsleitungen angeordnet sind und Seriell-Parallel-Konverter (359; 459) zwischen den besagten Übertragungsleitungen und den besagten Anzeigelampen angeordnet sind, um die Signale von dem Gehäuse (306; 407) seriell an die besagte Bedienungseinheit (307; 408) zu übertragen.

5. Programmierbare Folgesteuerungsanlage nach Anspruch 4, dadurch gekennzeichnet, daß der besagte Seriell-Parallel-Konverter in besagter Bedienungseinheit (307; 408) untergebracht ist und mit den Anzeigelampen verbunden ist.

## Revendications

1. Unité de commande séquence programmable comportant :
des modules d'entrée/sortie (3a, 3b, 3c,...,4a, 4b, 4c...) munis chacun d'un boîtier (306 ; 407) et d'un panneau (307 ; 408) ;
une unité de traitement centrale (2), comprenant un processeur logique (2a), une mémoire de programme d'utilisateur (2b) et une mémoire de programme de système (2c) ;
des bus d'entrée/sortie (5) pour relier lesdits modules d'entrée/sortie et ladite unité de traitement centrale ;
caractérisée en ce que
ledit boîtier (306 ; 407) possède :
une pluralité de bornes d'entrée/sortie (Tiₙ ; Toₙ), des circuits d'entrée/sortie (301-304 ; 401-405) reliés auxdites bornes d'entrée/sortie , et
des moyens pour relier lesdites bornes d'entrée/sortie auxdits bus d'entrée/sortie ;
ledit panneau (307 ; 408) possède une pluralité de lampes témoins (Liₙ ; Loₙ) pour indiquer les états de signaux délivrés auxdites bornes d'entrée/sortie, ledit panneau étant fixé de façon amovible audit boîtier, de telle sorte que lorsque ledit panneau est fixé audit boîtier (306 ; 407), ledit panneau (307 ; 408) est disposé de manière à recouvrir la surface antérieure desdites bornes d'entrée/sortie ;
ledit panneau (307 ; 408) possède un espace pour recevoir lesdites bornes sur un côté tourné vers lesdites bornes d'entrée/sortie ;
lesdites lampes témoins sont disposées de manière à visualiser les états de signaux délivrés aux bornes d'entrée/sortie en donnant une indication sur un plan du panneau opposé auxdites bornes d'entrée/sortie ; et
lesdites bornes d'entrée/sortie et lesdites lampes témoins sont reliées par des connecteurs (320, 321 ; 340-344).

2. Unité de commande à séquence programmable selon la revendication 1, caractérisée en ce que
ledit boîtier (306 ; 407) possède à sa première extrémité un moyen de connexion pour lesdits bus d'entrée/sortie (5) et à l'autre extrémité une pluralité de bornes d'entrée/sortie (Tiₙ ; Toₙ), respectivement.

3. Unité de commande à séquence programmable selon la revendication 2, caractérisée en ce que l'ordre desdites lampes témoins est agencé pour coîncider avec celui des bornes d'entrée/sortie lorsque l'unité est fixée audit boîtier (306 ; 407).

4. Unité de commande à séquence programmable selon la revendication 1, caractérisée en ce que des lignes de transmission série (350 ; 450) sont prévues reliant lesdites lampes témoins (Liₙ ; Loₙ) auxdites bornes d'entrée/sortie (Tiₙ ; Toₙ), des moyens de conversion parallèlesérie (305 ; 406) disposés entre lesdites bornes d'entrée/sortie et lesdites lignes de transmission et des moyens de conversion série-parallèle (359 ; 459) disposés entre les lignes de transmission et lesdites lampes témoins de manière à transmettre en série les signaux provenant dudit boitier (306 ; 407) audit panneau (307 ; 408).

5. Unité de commande à séquence programmable selon la revendication 4, caractérisée en ce que lesdits moyens de conversion série-parallèle sont montés sur ledit panneau (307 ; 408) et reliés auxdites lampes témoins.
